# EUROPÄISCHE PATENTANMELDUNG

(11) **EP 1 340 935 A1**
(43) Veröffentlichungstag der Anmeldung: **03.09.2003**
(21) Anmeldenummer: 02004016.8
(22) Anmeldetag: 22.02.2002
(51) Int. Cl.: F16L 23/08

(54) **Vorrichtung zum Gegeneinanderpressen von zwei Flanschen einer Rohrverbindung mittels Druckstücken aus einer Cu-Ni Legierung**

(71) Anmelder: Fend, Heinrich, CH-9470 Buchs (CH)
(72) Erfinder: Fend, Heinrich, CH-9470 Buchs (CH)
(74) Vertreter: Hepp, Dieter

(57) **Zusammenfassung**

Eine Vorrichtung zum Gegeneinanderpressen von zwei Flanschen einer Flanschverbindung weist mehrere Laschen (23) und mit den Laschen (23) gelenkig verbundene Druckstücke (9) auf. Die Druckstücke weisen je zwei Flanken (13) auf, die mit einem Auflagebereich (16) zur Anlage an einem der Flansche (1, 2) versehen sind. Gemäss der Erfindung ist wenigstens der Auflagebereich (16) mindestens teilweise aus einer Cu-Ni Legierung geformt.

## Beschreibung

Die Erfindung betrifft eine Vorrichtung zum Gegeneinanderpressen von zwei Flanschen einer Rohrverbindung, die Verwendung einer Cu-Ni Legierung zur Bildung eines Auflagebereichs eines Druckstücks für eine solche Vorrichtung und ein Verfahren zum Herstellen eines solchen Druckstücks gemäss den Merkmalen des Oberbegriffs der unabhängigen Patentansprüche.

Solche Vorrichtungen, in welchen die üblicherweise konischen Flansche von zwei zu verbindenden Rohren durch eine sogenannte Spannkette umschlossen und durch Zusammenziehen der Kette gegeneinandergepresst werden können, sind in verschiedenen Ausführungen bekannt. Die Vorrichtungen können eine dichte und platzsparende Schnellschluss-Verbindung gewährleisten, die je nach Auslegung auch für Metalldichtungen geeignet ist und die auch grosse Überdrucke aushalten können. Solche Spannketten werden häufig im Zusammenhang mit Flanschen aus rostfreiem Stahl eingesetzt. Solche Flanschverbindungen werden beispielsweise bei Beschleuniger-Anlagen, bei Anwendungen in der Halbleiterindustrie oder für chemische Anwendungen eingesetzt. Eine solche Vorrichtung ist beispielsweise aus der EP 571 687 bekannt.

Vorrichtungen der darin gezeigten Art weisen Druckstücke auf, die über Laschen gelenkig miteinander verbunden sind. Die Druckstücke werden mit einer Auflagefläche an die konischen Flansche angepresst und verbinden so die Flansche miteinander. Bei solchen bekannten Druckstücken ergeben sich Probleme im Zusammenhang mit dem Reibungskoefffizient zwischen den Auflageflächen der Druckstücke einerseits und den Flanschen andererseits. Der Reibungskoeffizient sollte so klein wie möglich sein, so dass sich die Druckstücke sicher auf die konischen Flanschoberflächen anpressen lassen. Der Reibungskoeffizient soll auch gering sein, damit sich die Druckstücke zum Öffnen der Flanschverbindung einfach von den Flanschen entfernen lassen. Der Reibungskoeffizient lässt sich durch Veränderung der Oberfläche der Flanschflächen kaum beeinflussen, da die Flansche meist bereits vorgegeben sind. Der Reibungskoeffizient könnte zwar theoretisch durch Schmierung reduziert werden. Dies ist aber in vielen Anwendungen auf Grund der Verschmutzung unerwünscht.

Die Aufgabe der vorliegenden Erfindung besteht daher darin, die Nachteile des Bekannten zu vermeiden, insbesondere also ein Druckstück zu schaffen, welches ohne Schmierung einen ausreichend geringen Reibungskoeffizienten aufweist und die Gefahr des Anfressens beseitigen. Eine weitere Aufgabe der vorliegenden Erfindung besteht darin, ein Material zu finden, mit dem sich mindestens der Auflagebereich eines solchen Druckstücks herstellen lässt. Das Material soll ausserdem ausreichend stabil sein, damit die nötige Dichtkraft erreicht werden kann. Die Dichtkraft kann sehr hoch sein, da in vielen Fällen Metalldichtungen verwendet werden. Dies kann beispielsweise im Hinblick auf die Strahlenbeständigkeit einer solchen Verbindung erforderlich sein. Eine weitere Aufgabe der vorliegenden Erfindung besteht ausserdem darin, ein Verfahren zum Herstellen von solchen Druckstücken zu schaffen.

Erfindungsgemäss werden diese Aufgaben mit einer Vorrichtung, einem Material und einem Verfahren gemäss den Merkmalen des kennzeichnenden Teils der unabhängigen Patentansprüche gelöst.

Die erfindungsgemässe Vorrichtung zum Gegeneinanderpressen von zwei Flanschen einer Flanschverbindung weist mehrere, insbesondere durch Laschen gelenkig verbundene Druckstücke auf. Die Druckstücke haben wenigstens je zwei Auflagebereiche, die zur Anlage an je einen der Flansche dienen. Die Vorrichtung kann beispielsweise identisch wie die Vorrichtungen in EP 571 687 konstruiert sein, ohne dass die vorliegende Erfindung auf die in EP 571 687 gezeigten Ausführungsbeispiele beschränkt wäre. Erfindungsgemäss besteht das Druckstück gemäss der vorliegenden Erfindung in dem oder den Auflagebereichen wenigstens teilweise, vorzugsweise vollständig aus einer Cu-Ni Legierung.

Gemäss einer ersten bevorzugten Ausführungsform besteht das ganze Druckstück aus einer Cu-Ni Legierung. Mit dieser Ausführungsform kann insbesondere auf verhältnismässig teure Beschichtungsverfahren verzichtet werden. Gemäss einer weiteren bevorzugten Ausführungsform sind die einstückig aus der Cu-Ni Legierung bestehenden Druckstücke kalt verformt. Es hat sich herausgestellt, dass sich durch Kaltverformung eine besonders hohe Festigkeit der Druckstücke erzielen lässt. Die hohe Festigkeit ist insbesondere im Hinblick auf die hohen Dichtkräfte, die mit der erfindungsgemässen Vorrichtung erzielt werden sollen, vorteilhaft.

Gemäss einer alternativen Ausführungsform kann aber auch lediglich der Auflagebereich der Druckstücke aus einer Cu-Ni Legierung bestehen. Typischerweise kann im Auflagebereich eine Cu-Ni Beschichtung aufgebracht sein.

Bevorzugt wird eine Cu-Ni Legierung verwendet, die 30% bis 90% Kupfer und 10% bis 65% Nickel enthält. Die Legierung kann ausserdem gegebenenfalls Zusatzstoffe wie Zink, Eisen oder Mangan enthalten. Aus Gründen der Bearbeitbarkeit und aus Kostengründen sollte der Nickelanteil nicht zu gross werden. Es hat sich gezeigt, dass bereits mit 10% Nickel ausreichend geringe Reibungskoeffizienten erreichbar sind. Zusatzstoffe wie Eisen können in geringen Mengen die Härte des Druckstücks vergrössern, ohne dass die Legierung magnetisch wird.

Ein weiterer Aspekt der Erfindung besteht in der Verwendung einer Cu-Ni Legierung zur Bildung eines Auflagebereichs eines Druckstücks in einer Vorrichtung zum Gegeneinanderpressen von zwei Flanschen einer Flanschverbindung. Es hat sich überraschend gezeigt, dass sich mit Auflagebereichen aus Cu-Ni Legierungen verschiedene Vorteile im Zusammenhang mit Druckstücken für Flanschverbindungen erzielen lassen. Diese Legierungen weisen einen ausreichend geringen Reibungskoeffizient auf, der ein einfaches Anpressen auf die und auch wieder ein einfaches Entfernen der Druckstücke von den Flanschen erlaubt. Typischerweise wird im Zusammenhang mit Flanschen aus rostfreiem Stahl mit einer typischen Neigung zwischen 15 und 20 Grad ein Reibungskoeffizient von ca. 0.15 - 0.2 erreicht.

Ausserdem hat sich gezeigt, dass durch die Verwendung von Cu-Ni Legierungen auch bei hohem Temperaturen (bis ca. 400° Grad) eine konstante Festigkeit der Druckstücke erzielbar ist. Ein weiterer Vorteil besteht darin, dass solche Legierungen antimagnetisch sind. Insbesondere bei Einsatz in Beschleunigeranlagen ist deshalb der Vorteil von vollständig aus solchen Legierungen bestehenden Druckstücken besonders gross.

In dem Verfahren gemäss der vorliegenden Erfindung wird ein Druckstück durch Kaltverformen aus einer Cu-Ni Legierung hergestellt. Gemäss einem alternativen Verfahren ist es auch denkbar, zuerst einen Grundkörper für ein Grundstück bereitzustellen. Der Grundkörper kann beispielsweise aus rostfreiem Stahl bestehen. In einem weiteren Schritt wird wenigstens im Bereich der Auflagefläche des Druckstücks eine Beschichtung aus einer Cu-Ni Legierung angebracht.

Die Erfindung wird im Folgenden in Ausführungsbeispielen und an Hand der Zeichnungen näher erläutert. Es zeigen:
- Figur 1:: Einen Axialschnitt durch ein Druckstück einer erfindungsgemässen Vorrichtung samt Flanschen und Dichtung einer Rohrverbindung,
- Figur 2:: eine Stirnansicht einer solchen Vorrichtung in kleinerem Massstab,
- Figur 3:: einen Querschnitt durch ein einzelnes Druckstück,
- Figur 4:: einen Querschnitt durch ein alternatives Ausführungsbeispiel eines einzelnen Druckstücks,
- Figur 5:: eine Seitenansicht des Druckstücks von Figur 3, und
- Figur 6:: eine Seitenansicht eines Druckstücks einer alternativen Ausführungsform.

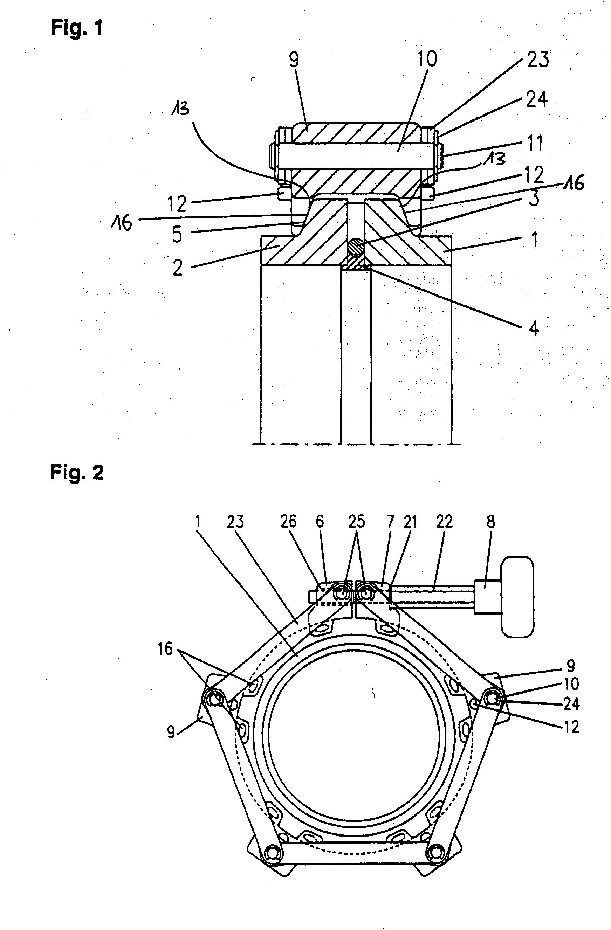

Figur 1 zeigt zwei konische Flansche 1, 2, zwischen denen eine Dichtung 3 angeordnet ist. Die Dichtung 3 sitzt auf einem Dichtring 4, der auch dazu dient, die Flansche 1, 2 gegenseitig zu zentrieren. Auf den konischen Seitenflächen 5 der beiden Flansche 1, 2 liegt ein Druckstück 9 auf. Das Druckstück 9 ist in einem Kettengelenk 11 schwenkbar verbunden. Das Kettengelenk 11 ist im Ausführungsbeispiel von einem Bolzen 10 gebildet. Andere Ausführungsformen sind denkbar. Auf dem Bolzen 10 sind Laschen 23 gelagert, welche benachbarte Kettengelenke miteinander verbinden. Die Laschen 23 sind aussen am Druckstück 9 angeordnet und durch Sicherungsscheiben 24 gesichert. Das Druckstück 9 weist ferner an seinen Aussenseiten einen oder zwei zapfenförmige Fortsätze 12 auf, die sich in Richtung der Breite des Druckstücks 9 in den Bereich der Laschen 23 erstrecken und die in Zusammenwirkung mit den Laschen 23 die Schwenkbarkeit des Druckstücks 9 bezüglich der Laschen 23 begrenzen. Das Druckstück 9 weist zwei Flanken 13 auf, welche gegen die Seitenflächen 5 der Flansche 1, 2 pressbar sind. Der Kontakt zwischen den Flanken 13 und den Seitenflächen 5 erfolgt in einem Auflagebereich 16. Erfindungsgemäss ist wenigstens der Auflagebereich 16 aus einer Cu-Ni Legierung geformt. Das in Figur 1 gezeigte Druckstück kann beliebige andere Formen aufweisen, ohne dass die vorliegende Erfindung verlassen wird, solange wenigstens der Auflagebereich 16 teilweise aus einer Cu-Ni Legierung besteht.

In Figur 2 sind alle Teile einer erfindungsgemässen Vorrichtung in einer Stirnansicht dargestellt. Es ist ersichtlich, wie die Druckstücke 9 in einer von den Laschen 23 und den Kettengelenkbolzen 10 gebildeten Spannkette angeordnet sind. Jede der beiden Flanken 13 jedes Druckstücks 9 liegt am betreffenden Flansch in diesem Ausführungsbeispiel jeweils in zwei voneinander getrennten Auflagebereichen 16 an. Wenigstens diese Auflagebereiche 16 sind aus der Cu-Ni Legierung ausgebildet. Die Krafteinleitung in das Druckstück erfolgt nur an einer Stelle, nämlich über den Gelenkbolzen 10. Das Druckstück 9 ist auf dem Bolzen 10 schwenkbar gelagert. Es kann sich jedoch im ungespannten Zustand der Spannkette nur soweit verdrehen als dies die zapfenförmigen Fortsätze 12 im Anschlag an die Laschen 23 gestatten. Die Spannkette wird durch eine Schraube 22 mit einem Griff 8 und zwei Endstücken 6, 7 montiert und angezogen. Die Endstücke 6, 7 sind mit einem freien Ende je einer Lasche 23 über einen Bolzen 25 schwenkbar verbunden. Die Schraube 22 ist im Endstück 7 geführt, während das Endstück 6 ein Innengewinde 26 besitzt, in das die Schraube 22 eingreift. Die Stirnfläche eines verdickten Abschnittes des Schaftes der Schraube 22 liegt über eine Unterlagescheibe 21 an einer der Seitenflächen des Endstücks 7 an. So sind die beiden Endstücke 6, 7 in einstellbarem Abstand voneinander gehalten. Jedes der beiden Endstücke 6, 7 besitzt je zwei Flanken mit jeweils einem Auflagebereich zur Anlage an den beiden Flanschen 1, 2 auf. Auch die Endstücke 6, 7 bzw. wenigstens deren Auflagebereich ist gemäss der vorliegenden Erfindung aus einer Cu-Ni Legierung geformt.

An jeder Flanke 13 eines Druckstücks 9 kann gemäss dem Ausführungsbeispiel jeder Auflagebereich 16 so ausgebildet sein, dass er nicht genau auf die entsprechende Flanschform passt, sondern einen grösseren Krümmungsradius aufweist als die Flansche 1, 2 im Bereich der Anlagestellen des Druckstücks 9. Wenn der Krümmungsradius des Auflagebereichs 16 gleich gross wäre wie der Flanschradius an den vorgesehenen Anlagestellen, würde die Gefahr bestehen, dass der Auflagebereich am Anfang des Schliessvorgangs nur an den beiden Enden des Auflagebereichs mit je einer scharfen Kante auf den Flansch drückt und diesen so beschädigt. Im Extremfall könnte der Krümmungsradius des Auflagebereichs bei weniger hoch beanspruchten Verbindungen auch unendlich sein, das heisst der Auflagebereich 16 kann eben sein. Bei höheren Beanspruchungen oder wenn eine kleinere Flächenpressung erwünscht ist, kann jeder Auflagebereich konkav gebogen sein. Dabei sollte der Krümmungsradius jedoch wie erwähnt grösser sein als der Radius der Flansche im Bereich der Anlagestellen des Druckstücks 9. Im Rahmen der Erfindung sind auch beliebige andere geometrische Ausbildungen der Druckstücke oder Auflagebereiche denkbar, wobei jeweils wenigstens der Auflagebereich 16 aus einer Cu-Ni Legierung besteht.

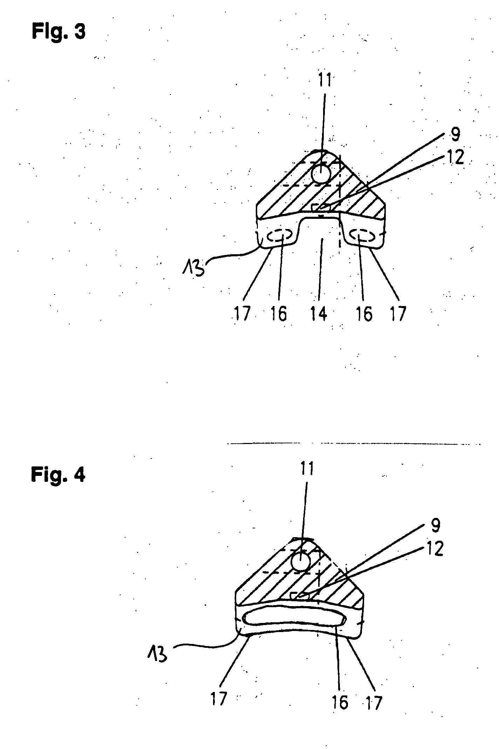

In Figur 3 sind weitere Details des Druckstücks 9 zu erkennen. Insbesondere weist das Druckstück an jeder Flanke 13 zwei im Abstand voneinander angeordnete Auflagebereiche 16 auf. Die Auflagebereiche 16 sind im Ausführungsbeispiel eben ausgebildet und sie sind an den Flanken 13 der Druckstücke 9 angebracht. Die Flanke 13 kann zwischen den Auflagebereichen 16 eine Ausnehmung 14 aufweisen. Auch die inneren Begrenzungen 17 der Innenflächen der Flanken 13 verlaufen tangential zum Flansch.

Figur 4 zeigt ein alternatives Ausführungsbeispiel. Im Unterschied zum Ausführungsbeispiel gemäss Figur 3 ist hier keine Ausnehmung vorgesehen und es ist pro Druckstück 9 nur ein Auflagebereich 16 vorgesehen, der sich im Wesentlichen über die ganze Flanke 13 erstreckt.

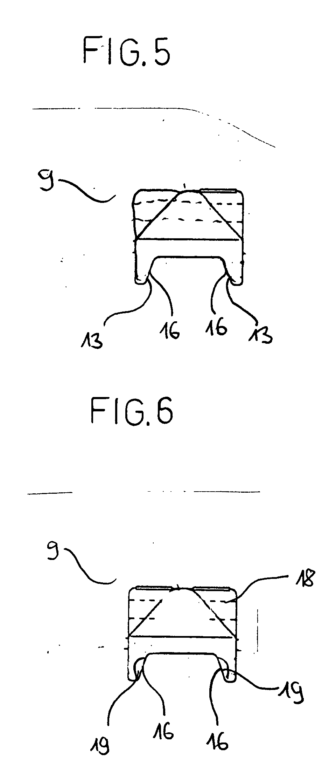

Figur 5 zeigt ein Druckstück 9, bei dem die Auflagebereiche 16 gleich wie die Aussenseite der Flansche gekrümmt sind, jedoch mit einem Krümmungsradius der grösser ist als der Radius der Flansche bei den Auflagestellen des Druckstücks. Die Auflagebereiche 16 legen auf den Flanken 13 des Druckstücks 9. Gemäss dem Ausführungsbeispiel in Figur 5 ist das ganze Druckstück 9 einstückig aus der Cu-Ni Legierung hergestellt. Die Herstellung erfolgt in an sich bekannter Weise durch Kaltverformung.

Figur 6 zeigt ein alternatives Ausführungsbeispiel eines Druckstücks 9. Im Ausführungsbeispiel gemäss Figur 6 ist das Druckstück 9 aus einem Grundkörper 18 gebildet, der im Bereich der Auflageflächen 16 mit einer Beschichtung 19 versehen ist.

Die Beschichtung, beispielsweise eine Platierung kann beispielsweise eine Dicke von 0.15 mm bis 0.25 mm aufweisen.

Zur Anwendung gelangen können verschiedene Cu-Ni Legierungen mit einem Kupferanteil von vorzugsweise etwa 30 bis 90 Massenprozent. Insbesondere kann als Cu-Ni Legierung eine der folgenden Legierungen verwendet werden:

| A) Arcap (z.B. von Durofer, St. Gallen, Schweiz) | | | | |
|---|---|---|---|---|
| **Bezeichnung** | **Kupfer** | **Nickel** | **Zusatzmetalle** | **Zink** |
| AP 1 | 65 | 25 | 2 | Rest (8) |
| AP 1C | 56 | 25 | 2 | Rest (17) |
| AP 1D | 61 | 25 | 2.5 | Rest (11.5) |
| AP 1M | 53 | 25 | 2.5 | Rest (19.5) |

| | | | | |
|---|---|---|---|---|
| B) CuNiFe (z.B. Thyssen Schweiz, Wil) | | | | |

| **Bezeichnung** | **Kupfer** | **Nickel** | **Fe** | **Mn** |
|---|---|---|---|---|
| CuNi10Fe1Mn | 87.7 | 10 | 1.5 | 0.8 |
| CuNi25 | 75 | 25 | - | - |
| CuNi30Mn1Fe | 67.3 | 31 | 0.7 | 1 |
| CuNi30Fe2Mn2 | 66 | 30 | 2 | 2 |

| | | | | | | |
|---|---|---|---|---|---|---|
| C) Monel (Hersteller: ESPI) | | | | | | |

| **Bezeichnung** | **Kupfer** | **Nickel** | **Fe** | **Mn** | **Al** | **Ti** |
|---|---|---|---|---|---|---|
| Monel alloy 400 | 32 | 65.1 | 1.6 | 1.1 | - | - |
| Monel alloy 404 | 47 | 52.5 | - | - | - | - |
| Monel alloy R-405 | 32.5 | 65 | 1.2 | 1.1 | - | - |
| Monel alloy K-500 | 30.2 | 64.7 | 1 | - | 2.7 | 0.6 |
| | | | | | | |
| Bezeichnung | Kupfer | | Nickel | | Fe | |
| Werkstoff 400 | 30 | | 62.5 | | 1.5 | |
| Angaben in Massen -% | | | | | | |

Es hat sich herausgestellt, dass insbesondere Arcap AP 1C, Arcap AP 1D, CuNi10Fe1Mn, CuNi25, CuNi30Mn1Fe und Monel alloy 404 im Rahmen der vorliegenden Erfindung besonders geeignet sind. Bevorzugt werden insbesondere Legierungen mit einem verhältnismässig hohen Kupferanteil sowie Legierungen ohne Eisenanteil.

## Patentansprüche

1. Vorrichtung zum Gegeneinanderpressen von zwei Flanschen (1, 2) einer Flanschverbindung, mit insbesondere durch Laschen (23), gelenkig verbundenen Druckstücken (9), die je zwei Flanken (13) mit je wenigstens einem Auflagebereich (16) zur Anlage an einem der Flansche (1, 2) aufweisen, **dadurch gekennzeichnet, dass** wenigstens der Auflagebereich (16) mindestens teilweise aus einer Cu-Ni Legierung besteht.

2. Vorrichtung nach Anspruch 1, **dadurch gekennzeichnet, dass** die Druckstücke (9) ganz aus einer Cu-Ni Legierung bestehen.

3. Vorrichtung nach Anspruch 2, **dadurch gekennzeichnet, dass** die Druckstücke (9) kalt verformt sind.

4. Vorrichtung nach Anspruch 1, **dadurch gekennzeichnet, dass** die Druckstücke (9) wenigstens im Auflagebereich (16) eine Beschichtung (19) aus einer Cu-Ni Legierung aufweisen.

5. Vorrichtung nach einem der Ansprüche 1 bis 4, **dadurch gekennzeichnet, dass** die Cu-Ni Legierung 30% bis 90% Kupfer und 10% bis 65% Nickel sowie gegebenenfalls Zusatzstoffe enthält.

6. Verwendung einer Cu-Ni Legierung zur Bildung eines Auflagebereichs (16) eines Druckstücks (9) in einer Vorrichtung zum Gegeneinanderpressen von zwei Flanschen (1, 2) einer Flanschverbindung.

7. Verfahren zum Herstellen eines Druckstücks (9) für eine Vorrichtung zum Gegeneinanderpressen von zwei Flanschen (1, 2) einer Flanschverbindung, **dadurch gekennzeichnet, dass** das Druckstück (9) aus einer Cu-Ni Legierung hergestellt wird.

8. Verfahren nach Anspruch 7, **dadurch gekennzeichnet, dass** das Druckstück (9) kalt verformt wird.

9. Verfahren zum Herstellen eines Druckstücks (9), bestehend aus den Schritten,
- Bereitstellen eines Grundkörpers (18) für ein Druckstück (9)
- Beschichten wenigstens eines Auflagebereichs (16) des Grundkörpers (18) mit einer Cu-Ni Legierung.

10. Vorrichtung nach einem der Ansprüche 1 bis 5, **dadurch gekennzeichnet, dass** die Legierung derart ausgewählt ist, dass der Reibungskoeffizient zwischen Flanschen aus rostfreiem Stahl und Auflageflächen (16) des Druckstücks 0.15 - 0.2 beträgt.
